# EUROPÄISCHE PATENTSCHRIFT

(11) **EP 1 736 490 B1**
(45) Veröffentlichungstag und Bekanntmachung des Hinweises auf die Patenterteilung: **09.09.2009**
(21) Anmeldenummer: 06012152.2
(22) Anmeldetag: 13.06.2006
(51) Int. Cl.: C08G 18/44, C09D 175/04, C09D 175/06, C08G 18/08, C08G 18/12, C08G 18/40, C08G 18/32, C08G 18/38, C08G 18/70

(54) **Polymermischung auf Basis von Polycarbonatpolyolen**
Polymer blend based on polycarbonate polyols
Mélange de polymères à partir de polyols de polycarbonate

(30) Priorität: 23.06.2005 DE 10529626
(43) Veröffentlichungstag der Anmeldung: 27.12.2006
(73) Patentinhaber: Bayer MaterialScience AG, 51368 Leverkusen (DE)
(72) Erfinder: Rische, Thorsten, Dr., 59423 Unna (DE); Münzmay, Thomas, Dr., 41539 Dormagen (DE); Pohl, Torsten, Dr., 51377 Leverkusen (DE); Klippert, Uwe, 51399 Burscheid (DE); Hofacker, Steffen, Dr., 51519 Odenthal (DE)

(56) Entgegenhaltungen:
- EP-A- 0 578 940
- EP-A- 0 669 352
- WO-A-02/090413
- US-A- 4 237 264
- US-A1- 2002 052 461

## Beschreibung

Die Erfindung betrifft wässrige Beschichtungsmittel auf Basis von Polycarbonatpolyolen, ein Verfahren zu deren Herstellung und Verwendung als Softfeel-Lack.

Polyurethanpolyharnstoffdispersionen (PUR-Dispersionen) und wässrige Zubereitungen von PUR-Dispersionen sind bekannter Stand der Technik. Ein wichtiges Einsatzgebiet wässriger Zubereitungen ionisch modifizierter PUR-Dispersionen liegt im Bereich der Lackierung von Kunststoffteilen.

Aufgrund ästhetischer und technischer Anforderungen werden Kunststoffteile üblicherweise lackiert, um den Kunststoff vor äußeren Einflüssen, wie Sonnenlicht, chemischer, thermischer und mechanischer Beanspruchung zu schützen, um bestimmte Farbtöne und Farbeffekte zu erzielen, um Fehlstellen der Kunststoffoberfläche zu überdecken oder um der Kunststoffoberfläche einen angenehmen Griff (Haptik) zu verleihen. Zur Verbesserung der haptischen Eigenschaften von Kunststoffteilen werden in den letzten Jahren vermehrt sogenannte Softfeel Lacke eingesetzt. "Softfeel-Effekt" im Sinne der vorliegenden Erfindung bezeichnet ein besonderes Griffempfinden (Haptik) der lackierten Oberfläche; diese Haptik lässt sich mit Begriffen wie samtig, weich, gummiartig, warm umschreiben. Dem Trend folgend Emissionen von Lösemitteln in die Umwelt zu vermeiden, haben sich in den letzten Jahren wässrige Softfeel-Lacke auf Basis der Polyurethanchemie durchgesetzt, wie sie beispielhaft in der DE-A 44 06 159 offenbart werden. Diese Lacke ergeben neben einem ausgezeichneten Softfeel-Effekt auch Beschichtungen mit guter Beständigkeit und Schutzwirkung für das Kunststoffsubstrat. Inzwischen hat sich aber gezeigt, dass diese Lacke und Beschichtungen oftmals eine nur unzureichende Hydrolysestabilität aufweisen.

Die Aufgabe der vorliegenden Erfindung bestand daher in der Bereitstellung von Beschichtungsmitteln, die neben dem o.g. mechanischen und haptischen Eigenschaften, im Vergleich zu Beschichtungsmitteln des Stands der Technik, zu signifikant hydrolysestabileren Beschichtungen führen.

Wie beispielsweise in der DE-A 44 06 159 beschrieben, bestehen Kunststoffbeschichtungsmittel mit den gewünschten haptischen Softfeel-Eigenschaften zu einem Teil aus PUR-Dispersionen, die keine nennenswerten Mengen an hydroxyfunktionellen Gruppen aufweisen.

DE-A 101 22 444 beschreibt hydrolystabile, ionisch und/oder nichtionisch hydrophilierte Polyurethan-Polyhanstoff-(PUR)-Dispersionen auf Basis von Polycarbonatpolyolen und Polytetramethylenglykolpolyolen. Die Dispersionen führen auf unterschiedlichsten Substraten in einkomponentigen Beschichtungsmitteln zu hydrolysestabilen, knick- und kratzbeständigen Beschichtungen. Ein Einsatz dieser Dispersionen als Softfeel-Lacke ist jedoch nicht beschrieben.

Es wurde nun gefunden, dass wässrige Zweikomponenten(2K)-Beschichtungsmittel, die sowohl nichtfunktionelle PUR-Polymere auf Basis von speziellen Polycarbonatpolyolen und hydrophile, hydroxylgruppenhaltige PUR-Polymere auf Basis von speziellen Polycarbonatpolyolen enthalten, eine ausgezeichnete Hydrolysestabilität und gleichzeitig die gewünschten haptischen Eigenschaften zeigen.

Gegenstand der vorliegenden Erfindung sind daher wässrige Beschichtungsmittel enthaltend
I) hydroxylgruppenfreie Polyurethane und/oder Polyurethanharnstoffe,
II) ionisch modifizierte, hydroxylgruppenhaltige Polyurethane und/oder Polyurethanharnstoffe sowie
III) mindestens einen Vernetzer,
dadurch gekennzeichnet, dass die Komponenten (I) und (II) Polycarbonatpolyole enthalten, die einen Anteil von mindestens 25 Gew.-% an 1,4-Butandiol als Aufbaukomponente aufweisen.

Im Verfahren zur Herstellung der nichtfunktionellen PUR-Polymere (I) werden als Aufbaukomponenten ausgewählt aus der Gruppe der Komponenten
A.1) Polyisocyanate,
A.2) polymere Polyole mit einem zahlenmittleren Molekulargewicht von Mn 200 bis 8000 g/mol, die Polycarbonatpolyole enthalten, die mindestens zu 25 Gew.-% aus 1,4-Butandiol als Aufbaukomponente bestehen,
A.3) niedermolekulare Verbindungen des Molgewichts Mn 62 bis 400 g/mol die in Summe über zwei oder mehr Hydroxyl- und/oder Aminogruppen verfügen,
A.4) Verbindungen, die über eine Hydroxy- oder Aminogruppe verfügen,
A.5) isocyanatreaktive, ionische oder potentiell ionische Verbindungen sowie
A.6) isocyanatreaktive, nichtionische hydrophile Verbindungen eingesetzt.

Geeignete Polyisocyanate der Komponente A.1) sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Beispiele geeigneter Polyisocyanate sind Hexamethylendiisocyanat (HDI), Isophorondiisocyanat (IPDI), die isomeren Dicyclohexylmethan-4,4'-diisocyanat oder deren Mischungen beliebigen Isomerengehalts und 1,4-Cyclohexyldiisocyanat.

Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen.

Besonders bevorzugt sind Hexamethylendüsocyanat, Isophorondiisocyanat, die isomeren Dicyclohexylmethan-4,4'-diisocyanat sowie deren Mischungen.

Hydroxylgruppen aufweisende Polycarbonatpolyole entsprechend der Definition der Komponente A.2) sind durch Reaktion von Kohlensäurederivaten, z.B. Diphenylcarbonat, Dimethylcarbonat oder Phosgen mit Diolen erhältlich. Die erfindungsgemäß einzusetzenden hydroxyfunktionellen Polycarbonatpolyole A.2) haben eine mittlere Hydroxylfunktionalität von 1,6 bis 4, bevorzugt, 1,8 bis 3 und besonders bevorzugt 1,9 bis 2,3 und ein zahlenmittleres Molekulargewicht von 240 bis 8000 g/mol, bevorzugt von 500 bis 3000 g/mol, besonders bevorzugt von 750 bis 2500 g/mol. Die Herstellung der Polycarbonatpolyole erfolgt bevorzugt nach dem in der EP-A 1 404 740 (S. 6-8, Beispiele 1-6) und EP-A 1 477 508 (S. 5, Beispiel 3) beschriebenen Herstellverfahren.

Als Diole kommen z.B. 1,3- und 1,4-Butandiol, 1,6-Hexandiol, 1,8-Octandiol, 1,12-Dodecandiol, Neopentylglykol, 1,4-Bishydroxymethylcyclohexan, 2-Methyl-1,3-propandiol und Trimethylpentandiol-1,3 in Frage, wobei der Anteil an 1,4-Butandiol mindestens 25 Gew.-% der eingesetzten Diolkomponenten beträgt. Bevorzugt enthält die Diolkompomponente 45 bis 100 Gew.-% 1,4-Butandiol, und 0 bis 55 Gew.-% 1,6-Hexandiol, besonders bevorzugt 60 bis 100 Gew.-% 1,4-Butandiol und 0 bis 40 Gew.-% 1,6-Hexandiol.

Die Hydroxylpolycarbonate sind bevorzugt linear, können jedoch gegebenenfalls durch den Einbau polyfunktioneller Komponenten, insbesondere niedermolekularer Polyole, verzweigt werden. Besonders bevorzugte Komponenten A.2) basieren auf Gemischen von 1,4-Butandiol und 1,6-Hexandiol und haben eine mittlere Hydroxylfunktionalität von 1,9 bis 2,05.

Als polymere Polyole A.2) können ebenfalls beispielsweise Polyesterpolyole eingesetzt werden, die ein Molekulargewicht Mn von 400 bis 6000 Da, besonders bevorzugt von 600 bis 3000 Da aufweisen. Ihre Hydroxylzahl beträgt im Allgemeinen 22 bis 400 mg KOH/g, bevorzugt 50 bis 200 mg KOH/g und besonders bevorzugt 80 bis 160 mg KOH/g, und weisen eine OH-Funktionalität von 1,5 bis 6, bevorzugt von 1,8 bis 4 und besonders bevorzugt von 1,9 bis 3,3 auf.

Gut geeignete Beispiele sind die an sind die bekannten Polykondensate aus Di- sowie gegebenenfalls Polyolen und Di- sowie gegebenenfalls Polycarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butandiol(1,4), Hexandiol(1,6), Neopentylglykol Als gegebenenfalls mit einzusetzende Polyole sind hier beispielsweise Trimethylolpropan, Glycerin oder Pentaerythrit zu nennen.

Als Dicarbonsäuren kommen bevorzugt in Frage Phthalsäure, Isophthalsäure, Terephthalsäure, Tetrahydrophthalsäure, Hexahydrophthalsäure, oder Adipinsäure. Anhydride dieser Säuren sind ebenfalls geeignet, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols höher als 2 ist. Als gegebenenfalls in kleineren Mengen mitzuverwendende Polycarbonsäure sei hier Trimellitsäure genannt.

Weitere geeignete Komponenten A.2) sind die aus der Polyurethanchemie bekannten Polylacton-und Polyetherpolyole soweit sie bezüglich Funktionalität und Molekulargewicht den oben genannten Kriterien entsprechen.

Der Anteil der Hydroxylpolycarbonate an der Summe der eingesetzten Polyole aus A.2) zur Herstellung der Polymere (I) bzw. (II) beträgt 35 bis 100 Gew.-%, bevorzugt 45 bis 100 Gew.-% und besonders bevorzugt 65 bis 100 Gew.-%.

Die zum Aufbau der Polyurethanharze eingesetzten niedermolekularen Polyole A.3) bewirken in der Regel eine Versteifung und oder eine Verzweigung der Polymerkette. Das Molekulargewicht liegt bevorzugt zwischen 62 und 200 Da. Geeignete Polyole können aliphatische, alicyclische oder aromatische Gruppen enthalten. Genannt seien hier beispielsweise die niedermolekularen Polyole mit bis zu etwa 20 Kohlenstoffatomen je Molekül, wie z. B. Ethylenglykol, Diethylenglykol, 1,4-Butandiol, 1,3-Butylenglykol, Cyclohexandiol, 1,4-Cyclohexandimethanol, 1,6-Hexandiol sowie Trimethylolpropan, Glycerin oder Pentaerythrit.

Di- oder Polyamine sowie Hydrazide können ebenfalls als A.3) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid. Als A.3) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen.

Die Polyurethanharze I) und II) können auch gegebenenfalls Bausteine A.4) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen.

Unter ionisch bzw. potentiell ionisch hydrophilierenden Verbindungen A.5) werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Geeignete ionisch oder potentiell ionisch hydrophilierende Verbindungen entsprechend der Definition der Komponente A.5) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von aliphatischen Diamninen wie z.B. Ethylendiamin (EDA) oder Isophorondiamin IPDA und Acrylsäure (EP-A 0 916 647, Beispiel 1) und dessen Alkali- und/oder Ammoniumsalze; Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO-A 01/88006 als Verbindung entsprechend der Defmition der Komponente A.5) verwendet werden.

Zum Aufbau der Komponente I) sind solche Verbindungen A.5) bevorzugt, die über Carboxy- oder Carboxylat- und/oder Sulfonatgruppen und/oder Ammoniumgruppen verfügen. Besonders bevorzugte ionische Verbindungen A.5) sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen entsprechend der Definition der Komponente A.6) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol% Propylenoxideinheiten aufweisen.

Für die PUR-Polymere (I) werden bevorzugt eine Kombination aus ionischen und nicht-ionischen Hydrophilierungsmitteln entsprechend den Definitionen der Komponenten A.5) und A.6) verwendet. Besonders bevorzugt sind Kombinationen aus nichtionischen und anionischen Hydrophilierungsmitteln.

Bevorzugt werden 5 bis 45 Gew.-% Komponente A.1), 50 bis 90 Gew.-% Komponente A.2), 1 bis 30 Gew.-% der Summe von Verbindungen A.3) und A.4), 0 bis 12 Gew.-% Komponente A.5), 0 bis 15 Gew.-% Komponente A.6) eingesetzt, wobei die Summe von A.5) und A.6) 0,1 bis 27 Gew.-% beträgt und sich die Summe aller Komponenten zu 100 Gew.-% addiert.

Besonders bevorzugt werden 10 bis 40 Gew.-% Komponente A.1), 55 bis 85 Gew.-% Komponente A.2), 1 bis 25 Gew.-% der Summe von Verbindungen A.3) und A.4), 0 bis 10 Gew.-% Komponente A.5), 0 bis 10 Gew.-% Komponente A.6) eingesetzt, wobei die Summe von A.5) und A.6) 0,1 bis 20 Gew.-% beträgt und sich die Summe aller Komponenten zu 100 Gew.-% addiert.

Ganz besonders bevorzugt werden 15 bis 40 Gew.-% Komponente A.1), 60 bis 85 Gew.-% Komponente A.2), 1 bis 20 Gew.-% der Summe von Verbindungen A.3), 0 bis 8 Gew.-% Komponente A.5), 0 bis 10 Gew.-% Komponente A.6) eingesetzt, wobei die Summe von A.5) und A.6) 0,1 bis 18 Gew.-% beträgt und sich die Summe aller Komponenten zu 100 Gew.-% addiert.

Die erfindungsgemäßen Beschichtungsmittel enthalten PUR-Polymere (I), die in Form ihrer wässrigen PUR-Dispersion (I) eingesetzt werden.

Das Verfahren zur Herstellung der wässrigen PUR-Dispersion (I) kann in einer oder mehreren Stufen in homogener oder bei mehrstufiger Umsetzung, teilweise in disperser Phase durchgeführt werden. Nach vollständig oder teilweise durchgeführter Polyaddition aus A.1) - A.6) erfolgt ein Dispergier-, Emulgier- oder Lösungsschritt. Im Anschluss erfolgt gegebenenfalls eine weitere Polyaddition oder Modifikation in disperser Phase.

Zur Herstellung der wässrigen PUR-Dispersionen (I) können alle aus dem Stand der Technik bekannten Verfahren wie z. B. Prepolymer-Mischverfahren, Acetonverfahren oder Schmelzdipergierverfahren verwendet werden. Bevorzugt wird die PUR-Dispersion (I) nach dem Aceton-Verfahren hergestellt.

Für die Herstellung der PUR-Dispersion (I) nach dem Aceton-Verfahren werden üblicherweise die Bestandteile A.2) bis A.6), die keine primären oder sekundären Aminogruppen aufweisen dürfen und die Polyisocyanatkomponente A.1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon.

Anschließend werden die gegebenenfalls zu Beginn der Reaktion noch nicht zugegebenen Bestandteile von A.1) ― A.6) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten A.1) - A.6) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Nach oder während der Herstellung der Polyurethan-Prepolymere erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie tertiäre Amine, z.B. Trialkylamine mit 1 bis 12, bevorzugt 1 bis 6 C-Atomen in jedem Alkylrest eingesetzt. Beispiele hierfür sind Trimethylamin, Triethylamin, Methyldiethylamin, Tripropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie Ammoniak oder Natrium- bzw. Kaliumhydroxid einsetzbar. Bevorzugt sind Triethylamin, Triethanolamin, Dimethylethanolamin oder Diisopropylethylamin.

Die Stoffmenge der Basen liegt zwischen 50 und 100 %, bevorzugt zwischen 70 und 100 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen A.6) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und/oder NH-funktionelle Komponenten mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von A.5) mit NH₂-oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 150 %, bevorzugt zwischen 70 bis 120 %, besonders bevorzugt zwischen 80 bis 120%.

Die aminischen Komponenten [A.3), A.4), A.5)] können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Die Herstellung der PUR-Dispersion (I) aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Der Feststoffgehalt der PUR-Dispersion (I) liegt zwischen 25 bis 65 %, bevorzugt 30 bis 60 % und besonders bevorzugt zwischen 40 bis 60 %.

Die ionisch modifizierten, hydroxylgruppenhaltigen Polyurethane und/oder Polyurethanharnstoffe (II) enthalten 5 bis 45 Gew.-% Komponente A.1), 50 bis 94,5 Gew.-% Komponenten A.2), 0 bis 15 Gew.-% Komponente A.3), 0,5 bis 12 Gew.-% Komponente A.5), 0 bis 15 Gew.-% Komponente A.6) wobei die Summe aller Komponenten zu 100 Gew.-% addiert.

Bevorzugt enthalten die ionisch modifizierten, hydroxylgruppenhaltigen Polyurethane und/oder Polyurethanharnstoffe (II) 7,5 bis 35 Gew.-% Komponente A.1), 60 bis 90 Gew.-% Komponenten A.2a), 0 bis 10 Gew.-% Komponenten A.3), 2,5 bis 7,5 Gew.-% Komponente A.5), 0 bis 12,5 Gew.-% Komponente A.6) wobei die Summe aller Komponenten zu 100 Gew.-% addiert.

Ganz besonders bevorzugt enthalten die ionisch modifizierten, hydroxylgruppenhaltigen Polyurethane und/oder Polyurethanharnstoffe (II) 10 bis 25 Gew.-% Komponente II.1), 65 bis 85 Gew.-% Komponenten A.2), 1,5 bis 5 Gew.-% Komponente A.3), 3 bis 7 Gew.-% Komponente A.5), 0 bis 10 Gew.-% Komponente A.6) wobei die Summe aller Komponenten zu 100 Gew.-% addiert.

Als Komponenten- A.3) kommen nur solche Verbindungen in Frage, die OH-funktionell sind. Komponenten A.4) werden zum Aufbau der Polymere (II) nicht eingesetzt.

Die ionisch modifizierten, hydroxylgruppenhaltigen Polyurethane und/oder Polyurethanharnstoffe (II) weisen bevorzugt eine reine ionische Hydrophilierung entsprechend der Definition der Komponenten A.5) auf. Die erfindungsgemäßen Beschichtungsmittel enthalten die ionisch modifizierten, hydroxylgruppenhaltigen Polyurethane und/oder Polyurethanharnstoffe (II), die bei der Herstellung entweder in die wässrige Form überführt werden und somit als Dispersion vorliegen oder alternativ auch in einem, gegebenenfalls mit Wasser mischbaren und gegenüber Isocyanatgruppen inerten Lösungsmittel als Lösung vorliegen.

Die ionisch modifizierten, hydroxylgruppenhaltigen Polyurethane und/oder Polyurethanharnstoffe (II) können nach den üblichen, im Stand der Technik bekannten Verfahren hergestellt werden. Die Polyurethane und/oder Polyurethanharnstoffe (II) unterscheiden sich von den PUR-Polymeren (I) insbesondere durch die Art der Herstellung und der Art der Hydrophilierung. Sie enthalten Carbonsäure- und/oder Sulfonsäuregruppen, bevorzugt Carbonsäuregruppen, die zumindest anteilig neutralisiert sein können, als hydrophile Gruppen. Zur Herstellung der PUR-Polymere (II) werden daher als Komponente A.5) solche bevorzugt, die über Carboxy- und/oder Carboxylatgruppen verfügen. Besonders bevorzugte ionische Verbindungen A.5) sind Dihydroxycarbonsäuren, ganz besonders bevorzugt sind α,α-Dimethylolalkansäuren, wie z.B. 2,2-Dimethylolpropionsäure, 2,2-Dimethylolbuttersäure oder Dihydroxybernsteinsäure.

Zur Herstellung der ionisch modifizierten, hydroxylgruppenhaltigen Polyurethane und/oder Polyurethanharnstoffe (II) werden üblicherweise die Komponenten A.2), A.3), A.5) und gegebenenfalls A.6), gegebenenfalls zusammen mit einem geeigneten Katalysator und bei Bedarf in einem geeigneten Lösemittel vorgelegt. In diese Mischung wird bei einer Temperatur von 0 bis 140°C, bevorzugt 70 bis 135°C und besonders bevorzugt bei 90 bis 130°C eine Polyisocyanatkomponente A.1) zugegeben und reagieren gelassen, bis das Reaktionsprodukt isocyanatfrei ist. Dabei werden die Einsatzmengen der Komponenten A.1) bis A.6) so bemessen, dass pro Val Hydroxylgruppen 0,45 bis 0,95, bevorzugt 0,55 bis 0,90, besonders bevorzugt 0,65 bis 0,85 Val Isocyanatgruppen kommen.

Bevorzugt erfolgt die Herstellung der ionisch modifizierte, hydroxylgruppenhaltige Polyurethane und/oder Polyurethanharnstoffe (II) ohne Zusatz von organischen Lösemitteln.

Die im Prepolymer eingebauten Säuregruppen werden zumindest anteilig neutralisiert. Dies kann während oder auch nach der Prepolymerherstellung aber auch während oder nach der Dispergierung in Wasser durch Zugabe geeigneter Neutralisationsmittel (siehe auch bei PUR-Dispersion (I)) erfolgen. Beispiele für geeignete Neutralisationsmittel sind Triethylamin, Triethanolamin, Dimethylethanolamin, Ethyldiisopropylamin oder Diisopropylethylamin. Das Neutralisationsmittel wird zumeist im Molverhältnis zu den Säuregruppen des Prepolymers von 0,3:1 bis 1,3:1, bevorzugt von 0,6:1 bis 1,1:1 eingesetzt.

Anschließend wird das hydroxylgruppenfunktionelle Polyurethan durch Zugabe von Wasser oder durch Eintragen in Wasser in eine wässrige Dispersion überführt.

Die Harze der nach dem vorhergehend beschriebenen Vorgehensweise erhältlichen PUR-Polymere (II) besitzen ein zahlenmittleres Molekulargewicht Mₙ von 1 000 bis 30 000 Da, bevorzugt von 1 500 bis 10 000 Da, eine Säurezahl von 10 bis 80, bevorzugt von 15 bis 40 mg KOH/g und einen Hydroxylgruppengehalt von 0,5 bis 6 Gew.-%, bevorzugt von 1,0 bis 4 Gew.-%.

Die PUR-Dispersionen (I) und (II) können darüber hinaus alle für PUR-Dispersionen bekannten Additive wie beispielsweise Antioxidantien, Lichtschutzmittel und/oder andere Hilfs- und Zusatzmittel sowie Füllstoffe enthalten.

In den erfindungsgemäßen Beschichtungsmitteln sind auch Vernetzer (III) enthalten. Je nach Wahl des Vernetzer können sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichen Ausmaß stattfindet. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Geeignete Vernetzer III) sind beispielsweise blockierte oder unblockierte Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze oder Anilinharze. Bevorzugt sind Polyisocyanate.

Besonders bevorzugt werden als Vernetzer-Komponente (III) Polyisocyanate mit freien IsocyanatGruppen eingesetzt, da die erhaltenen wässrigen Polyurethanlacke ein besonders hohes lacktechnische Niveau zeigen. Geeignete Vernetzer (III) sind beispielsweise Lackpolyisocyanate wie Uretdion-, Biuret-, Isocyanurat- oder Iminooxadiazindiongruppen aufweisenden Polyisocyanaten von Hexamethylendiisocyanat, 1-Isocyanato-3,3,5-trimethyl-5-isocyanatomethylcyclohexan oder Bis-(4-isocyanatocyclohexan)-methan.

Ebenfalls Gegenstand der vorliegenden Erfindung ist ein Zweikomponenten-Lack, enthaltend die erfindungsgemäßen Beschichtungsmittel.

Die hier beschriebenen PUR-Polymere (I) und (II) sind im Allgemeinen ausreichend hydrophil, so dass die Dispergierbarkeit auch hydrophober Vernetzer aus Komponente (III) gewährleistet ist. Falls gewünscht können aber auch zusätzliche externe Emulgatoren wie sie dem Fachmann bekannt sind zugesetzt werden.

Es können aber auch wasserlösliche bzw. dispergierbare Polyisocyanate wie sie z.B. durch Modifikation mit Carboxylat-, Sulfonat- und/oder Polyethylenoxidgruppen und/oder Polyethylenoxid/Polypropylenoxidgruppen erhältlich sind in Komponente (III) eingesetzt werden.

Prinzipiell möglich ist natürlich auch der Einsatz von Mischungen verschiedener Vernetzerharze der vorstehend genannten Art in der Komponente (III).

Ebenfalls Gegenstand der vorliegenden Erfindung ist ein Verfahren zur Herstellung der erfindungsgemäßen wässrigen Beschichtungsmitteln, dadurch gekennzeichnet, dass die PUR-Polymere (I) sowie die PUR-Polymere (II) in Wasser dispergiert und mit dem Vernetzer (III) vermischt werden.

Das Verhältnis des Vernetzers (III) zu den mit ihm reaktiven Verbindungen der Komponenten (II) ist so zu wählen, dass ein Verhältnis von gegenüber dem Vernetzer reaktiven Gruppen aus (II) (z.B. OH-Gruppen) zu den reaktiven Gruppen des Vernetzers (bei Isocyanaten NCO-Gruppen) von 0,5 : 1,0 bis 3,5 : 1,0, bevorzugt 1,0 : 1,0 bis 3,0 : 1,0 und besonders bevorzugt von 1,0 : 1,0 bis 2,5 : 1,0 resultiert.

Die Mischung der Komponenten (I) und (II) enthält bevorzugt 5 bis 95 Gew.-% (bzgl. Festharz), besonders bevorzugt 25 bis 75 Gew.-% (bzgl. Festharz) der Komponente (II), wobei die Menge von (I) so zu wählen ist, dass die Gesamtmengen von (I) und (II) sich zu 100 Gew.-% (bzgl. Festharz) aufaddieren.

Als lackübliche Hilfs- und Zusatzmittel können in den erfindungsgemäßen Beschichtungsmitteln die dem Fachmann bekannten Stoffe wie Entschäumungsmittel, Verdickungsmittel, Pigmente, Dispergierhilfsmittel, Mattierungsmittel, Katalysatoren, Hautverhinderungsmittel, Antiabsetzmittel und/oder Emulgatoren, sowie Additive, die den gewünschten Softfeel-Effekt verstärken, enthalten sein. Dabei ist es unerheblich zu welchem Zeitpunkt der Herstellung diese den erfindungsgemäßen Beschichtungsmitteln zugesetzt oder in diese eingearbeitet werden.

Die erfindungsgemäßen, wässrigen Beschichtungsmittel eignen sich für alle Einsatzgebiete, in denen wässrige Anstrich- und Beschichtungssysteme mit hohen Anforderungen an die Oberflächengüte Beständigkeit der Filme Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie als Hochglanzlacke.

Eine bevorzugte Verwendung der erfindungsgemäßen Beschichtungsmittel ist aber die Herstellung von Softfeel-Effektlacken, die gute Hydrolysebeständigkeiten bei sehr guten haptischen Eigenschaften gewährleisten. Bevorzugt werden solche Beschichtungsmittel in der Kunststofflackierung oder der Holzlackierung eingesetzt, wobei die Aushärtung üblicherweise bei Temperaturen zwischen Raumtemperatur und 130°C erfolgt. Die Zweikomponenten-Technologie mit nicht-blockierten Polyisocyanaten als Vernetzer erlaubt dabei die Verwendung vergleichsweise niedriger Aushärtetemperaturen in o.g. Intervall.

Somit sind Softfeel-Lacke, enthaltend die erfindungsgemäßen Beschichtungsmittel ebenfalls Gegenstand der vorliegenden Erfindung.

Die erfindungsgemäßen, wässrigen Beschichtungsmittel werden üblicherweise in Einschichtlacken oder in der Klar- oder Decklackschicht (oberste Schicht) von Mehrschichtaufbauten eingesetzt.

Die Herstellung der Beschichtung kann nach den unterschiedlichen Spritzverfahren wie beispielsweise Luftdruck-, Airless- oder Elektrostatik-Spritzverfahren unter Verwendung von Ein-oder gegebenenfalls Zweikomponenten-Spritzanlagen erfolgen. Die Lacke und Beschichtungsmittel, enthaltend die erfindungsgemäßen Bindemitteldispersionen, können jedoch auch nach anderen Methoden, beispielsweise durch Streichen, Rollen oder Rakeln appliziert werden.

Gegenstand der vorliegenden Erfindung ist ebenfalls ein Mehrschichtenaufbau, dadurch gekennzeichnet, dass die oberste Schicht, die eine Klar- oder Decklackschicht ist, einen Softfeel-Lack, enthaltend die erfindungsgemäßen Beschichtungsmittel, enthält.

### Beispiele:

Soweit nicht abweichend angegeben sind alle Prozentangaben als Gewichtsprozent zu verstehen.

### Verwendete Substanzen und Abkürzungen:

- Diaminosulfonat:: NH₂-CH₂CH₂-NH-CH₂CH₂-SO₃Na (45 %ig in Wasser)
- Desmophen^{®} 3600:: difunktioneller Polyether auf Propylenoxidbasis, zahlenmittleres Molekulargewicht 2000 g/mol, OH-Zahl 56 mg KOH/g (Bayer AG, Leverkusen, DE)
- Polyether LB 25:: (monofunktioneller Polyether auf Ethylenoxid-/Propylenoxidbasis zahlenmittleres Molekulargewicht 2250 g/mol, OH-Zahl 25 mg KOH/g (Bayer AG, Leverkusen, DE)
- BYK^{®} 348:: Benetzungsmittel (BYK-Chemie, Wesel, DE)
- Tego-Wet^{®} KL 245:: Verlaufsadditiv, 50 %ig in Wasser (Tegochemie, Essen, DE)
- Aquacer^{®} 535:: Wachsemulsion (BYK-Chemie, Wesel, DE)
- Entschäumer DNE:: Entschäumer (K. Obermayer, Bad Berleburg, DE)
- Sillitin^{®} Z 86:: Füllstoff (Hoffmann & Söhne, Neuburg, DE)
- Talkum^{®} IT extra:: Mattierungsmittel (Norwegian Talc, Frankfurt, DE)
- Bayferrox^{®} 318 M:: Farbpigment (schwarz) (Bayer AG, Leverkusen, DE)
- OK 412:: Mattierungsmittel (Degussa, Frankfurt, DE)
- Bayhydur^{®}3100:: Hydrophiles, aliphatisches Polyisocyanat auf Basis Hexamethylendiisocyanat (HDI) mit einem Isocyanatgehalt von 17,4 % (Bayer AG, Leverkusen, DE)
- MPA:: 1-Methoxy-2-propylacetat

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

### Beispiel 1 Polyesterpolyol

In ein 151-Reaktionsgefäß mit Rührer, Heizvorrichtung und Wasserabscheider mit Kühlvorrichtung wurden 1281 g Phthalsäureanhydrid, 5058 g Adipinsäure, 6387 g Hexandiol-1,6 und 675 g Neopentylglykol eingewogen und unter Stickstoff in einer Stunde auf 140°C aufgeheizt. In weiteren 9 Stunden wurde auf 220°C aufgeheizt und so lange bei dieser Temperatur kondensiert, bis eine Säurezahl kleiner 3 erreicht war. Das so erhaltene Polyesterpolyol hatte eine Viskosität (bestimmt als Auslaufzeit einer 80 %igen Lösung des Polyesters in Methoxypropylacetat im DIN 4-Becher bei 23°C) von 54 Sekunden und eine OH-Zahl von 160 mg KOH/g.

### Beispiel 2 Herstellung eines Polycarbonatdiols auf Basis von 1,4-Butandiol und 1,6-Hexandiol

1223 g 1,4-Butandiol und 535 g 1,6 Hexandiol wurden in einem Kolben vorgelegt und auf 100°C aufgeheizt. Schließlich wurden ca. 2 1/h Stickstoff in das Diolgemisch eingeleitet und 20 mbar Vakuum angelegt und das Gemisch solange entwässert (ca. 2 Stunden), bis der Wassergehalt ≤ 0,1 % betrug.

Danach wurden 0,44 g Ytterbium(III)acetylacetonat zugegeben, das Diolgemisch auf 110°C aufgeheizt. Anschließend wurden in ca. 20 Minuten 2297 g Dimethylcarbonat zulaufen lassen und das Reaktionsgemisch 24 h unter Rückfluß gehalten. Schließlich wurde die Temperatur auf 150°C erhöht und anfallendes Destillat entfernt. Danach erfolgte eine weitere Erhöhung auf 180°C gefolgt von einer weiteren Destillationsphase.

Das Reaktionsgemisch wurde auf 130°C abgekühlt und der Druck auf 10 mbar gesenkt. Anschließend erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten.

Anschließend wurde das Reaktionsgemisch auf 130°C abgekühlt und der Druck auf 10 mbar gesenkt. Danach erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten. Das Reaktionsgemisch wurde auf Raumtemperatur abgekühlt und die Kenndaten des Produktes bestimmt.

Es wird ein Polycarbonatdiol mit einer Hydroxylzahl von 57,3 mg KOH/g sowie einer Viskosität von 115 Pas bei 23°C erhalten.

### Beispiel 3 Herstellung eines Polycarbonatdiols auf Basis von 1,4-Butandiol und 1,6-Hexandiol

1239 g 1,4-Butandiol und 542 g 1,6 Hexandiol wurden in einem Kolben vorgelegt und auf 100°C im Ölbad aufgeheizt. Schließlich wurden ca. 2 l/h Stickstoff in das Diolgemisch eingeleitet und 20 mbar Vakkum angelegt und das Gemisch solange entwässert (ca. 2 Stunden) bis der Wassergehalt ≤ 0,1% betrug.

Danach wurden 0,44 g Ytterbium(III)acetylacetonat zugegeben das Diolgemisch auf 110°C aufgeheizt. Anschließend wurden in ca. 20 Minuten 2180 g Dimethylcarbonat zulaufen lassen und das Reaktionsgemisch 24 h unter Rückfluß gehalten. Schließlich wurde die Temperatur auf 150°C erhöht und anfallendes Destillat entfernt. Danach erfolgte eine weitere Erhöhung auf 180°C gefolgt von einer weiteren Destillationsphase.

Das Reaktionsgemisch wurde auf 130°C abgekühlt und der Druck auf 10 mbar gesenkt. Anschließend erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten.

Anschließend wurde das Reaktionsgemisch auf 130°C abgekühlt und der Druck auf 10 mbar gesenkt. Danach erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten. Danach wurde das Reaktionsgemisch auf Raumtemperatur abgekühlt und die Kenndaten des Produktes bestimmt.

Es wird ein Polycarbonatdiol mit einer Hydroxylzahl von 113,4 mg KOH/g sowie einer Viskosität von 13600 mPas bei 23°C erhalten.

### Beispiel 4 (Vergleich für Komponente I)

- Bayhydrol^{®} PR 240:: anionisch hydrophilierte PUR-Dispersion auf Polyesterbasis mit einem Festkörpergehalt von 40 % und einer mittleren Teilchengröße von 100-300 nm (Bayer AG, Leverkusen, DE)

### Beispiel 5 (Vergleich für Komponente I)

- Bayhydrol^{®} PR 340:: anionisch hydrophilierte PUR-Dispersion auf Basis eines Polycarbonatdiols, welches ausschließlich 1,6-Hexandiol als Diol-Aufbaukomponente erhält, mit einem Festkörpergehalt von 50 % und einer mittleren Teilchengröße von 100-300 nm (Bayer AG, Leverkusen, DE)

### Beispiel 6 nichtfunktionelle PUR-Dispersion (Komponente I) (erfindungsgemäß)

64,0 g Desmophen^{®} 3600, 196,8 g Beispiel 2, und 10,9 g Polyether LB 25 wurden auf 75°C aufgeheizt. Anschließend wurde bei 75°C innerhalb von 5 min 48,7 g Hexamethylendiisocanat zugegeben, auf 100°C aufgeheizt und solange bei 100°C gerührt, bis der theoretische NCO-Wert erreicht wurde. Das fertige Prepolymer wurde mit 568,1 g Aceton bei 50°C gelöst und anschließend eine Lösung aus 1,2 g Hydrazinhydrat, 7,70 g Diaminosulfonat, 2,20 g 1,2-Diaminoethan und 82,3 g Wasser innerhalb von 5 min zudosiert. Die Nachrührzeit betrug 30 min. Die Dispergierung erfolgte durch Zugabe von 408,4g Wasser. Nach Entfernung des Lösemittels durch Destillation im Vakuum wurde keine lagerstabile Dispersion mit einem Festkörpergehalt von 40,0 % erhalten.

### Beispiel 7: Hydroxyfunktionelle PUR-Dispersion des Stands der Technik (Vergleich)

Bayhydrol^{®} XP 2429: Aliphatische hydroxyfunktionelle Polyesterpolyurethan-Dispersion des Stands der Technik, hergestellt unter Verwendung eines Polycarbonatdiols, welches ausschließlich auf 1,6-Hexandiol als Diolkomponente basiert, mit einem Festkörpergehalt von 55 % (Bayer AG, Leverkusen, DE)

### Beispiel 8 Hydroxyfunktionelle PUR-Dispersion (Komponente II)

In einem 61-Reaktionsgefäß mit Kühl-, Heiz- und Rührvorrichtung wurden in einer Stickstoffatmosphäre 1170 g des Polyesterpolyols aus Beispiel 1 vorgelegt und zusammen mit 1140 g Polycarbonatdiol aus Beispiel 2, 90 g Trimethylolpropan, 120 g Dimethylolpropionsäure und 3,8 g Zinn-(II)-octoat auf 130°C aufgeheizt und 30 min homogenisiert. Anschließend wurde auf 80°C abgekühlt, 480 g Hexamethylendiisocyanat unter kräftigen Rühren zugegeben, unter Ausnutzung der Exothermie auf 140°C aufgeheizt und das Gemisch solange bei dieser Temperatur gehalten, bis sich keine NCO-Gruppen mehr feststellen ließen.

Anschließend wurde das so erhaltene Polyurethan auf 90°-100°C abgekühlt, 47 g Dimethylethanolamin (Neutralisationsgrad 60 %) zugesetzt, 15 Minuten homogenisiert und mit 2270 g demineralisiertem Wasser dispergiert. Die so erhaltene wässrige Polyurethanharz-Dispersion hatte einen OH-Gehalt (100 %ig) von 1,4 %, eine Säurezahl (100 %ig) von 16,8, eine mittlere Teilchengröße von 110 nm und eine Viskosität von ca. 2020 mPas (23°C; D = 40 s⁻¹) bei einem Festkörpergehalt von 51,2 Gew.-%.

### Beispiel 9 Hydrozyfunktionelle PUR-Dispersion (Komponente II)

In einem 61-Reaktionsgefäß mit Kühl-, Heiz- und Rührvorrichtung wurden in einer Stickstoffatmosphäre 1170 g des Polyesterpolyols aus Beispiel 1 vorgelegt und zusammen mit 1140 g Polycarbonatdiol aus Beispiel 3, 90 g Trimethylolpropan, 120 g Dimethylolpropionsäure, 125 g N-Methylpyrrolidon und 3,8 g Zinn-(II)-octoat auf 130°C aufgeheizt und 30 min homogenisiert. Anschließend wurde auf 80°C abgekühlt, 480 g Hexamethylendiisocyanat unter kräftigen Rühren zugegeben, unter Ausnutzung der Exothermie auf 140°C aufgeheizt und das Gemisch solange bei dieser Temperatur gehalten, bis sich keine NCO-Gruppen mehr feststellen ließen.

Anschließend wurde das so erhaltene Polyurethan auf 90°-100°C abgekühlt, 39 g Dimethylethanolamin (Neutralisationsgrad 50 %) zugesetzt, 15 Minuten homogenisiert mit 2270 g demineralisiertem Wasser dispergiert. Die so erhaltene wässrige Polyurethanharz-Dispersion hatte einen OH-Gehalt (100 %ig) von 1,4 %, eine Säurezahl (100 %ig) von 16,3, eine mittlere Teilchengröße von 150 nm und eine Viskosität von ca. 1680 mPas (23°C; D = 40 s⁻¹) bei einem Festkörpergehalt von 55,9 Gew.-%.

### Anwendungstechnischer Teil

Mit den Beispielen 1-9 werden folgende anwendungstechnische Versuche zur Herstellung von Softfeel Beschichtungen durchgeführt:

Die Herstellung des Stammlackes erfolgt nach Vordispergierung durch Anreibung über einen Laborschüttler. Die Temperatur des Mahlgutes sollte 40°C nicht überschreiten. Anschließend OK 412 ca. 10 min. einrühren. Nach Vernetzung wird das Lacksystem auf ca. 30 s Auslaufzeit (DIN ISO 2431, 5mm Düse) eingestellt und konventionell auf Bayblend^{®} T 65 verspritzt. Die Trockenfilmschichtdicke beträgt zwischen 30 und 40 µm.

**Tabelle 1 Anwendungstechnische Beispiele 10-15 (Vergleich)**

| **Beispiel** | **10** | **11** | **12** | **13** | **14** | **15** |
|---|---|---|---|---|---|---|
| **Komponente I:** | | | | | | |
| Beispiel 4 | 137,5 | | 127,5 | 139,8 | | |
| Beispiel 5 | | 100,0 | | | 100,0 | |
| Beispiel 6 | | | | | | 100,2 |
| | | | | | | |
| **Komponente II:** | | | | | | |
| Beispiel 7 | 100,0 | 72,7 | | | | 72,7 |
| Beispiel 8 | | | 100,0 | | 73,3 | |
| Beispiel 9 | | | | 100,0 | | |
| | | | | | | |

| **Additive / Pigmente:** | | | | | | |
|---|---|---|---|---|---|---|
| Entschäumer DNE | 0,8 | 0,5 | 0,7 | 0,8 | 0,5 | 0,5 |
| Tego^{®} Wet KL 245 | 1,1 | 0,9 | 1,1 | 1,2 | 0,9 | 0,9 |
| Byk^{®} 348 | 1,5 | 1,4 | 1,4 | 1,5 | 1,4 | 1,4 |
| Aquacer^{®} 535 | 5,6 | 4,0 | 5,2 | 5,7 | 4,0 | 4,0 |
| | | | | | | |
| Sillitin^{®} Z 86 | 19,1 | 13,9 | 17,9 | 19,3 | 13,9 | 13,9 |
| Talkum IT extra | 15,2 | 11,1 | 14,3 | 15,5 | 11,1 | 11,1 |
| Bayferrox^{®} 318 M | 50,8 | 37,0 | 47,6 | 51,5 | 37,0 | 37,0 |
| OK 412 | 10,2 | 7,4 | 9,5 | 10,3 | 7,4 | 7,4 |
| | | | | | | |

| **Komponente III:** | | | | | | |
|---|---|---|---|---|---|---|
| Bayhydur^{®} 3100, 75 % in MPA | 22,7 | 16,5 | 22,7 | 22,7 | 16,6 | 16,5 |
| | | | | | | |
| **NCO/OH-Verhältnis** | 1,5 | | | | | |

| | | | | | | |
|---|---|---|---|---|---|---|
| Applikationsbedingung: ca. 23°C und 55% rel. Luftfeuchtigkeit. Trocknungsbedingung: 10 min / RT, 30 min / 80°C und ca. 16h / 60°C Alterung | | | | | | |

**Tabelle 2 Anwendungstechnische Beispiele 16-17 (erfindungsgemäß)**

| **Beispiel** | **16** | **17** |
|---|---|---|
| **Komponente I:** | | |
| Beispiel 6 | 140,1 | 100,2 |
| | | |

| **Komponente II:** | | |
|---|---|---|
| Beispiel 8 | | 73,3 |
| Beispiel 9 | 100,0 | |
| | | |

| **Additive / Pigmente:** | | |
|---|---|---|
| Entschäumer DNE | 0,8 | 0,5 |
| Tego^{®} Wet KL 245 | 1,2 | 0,9 |
| Byk^{®} 348 | 1,5 | 1,4 |
| Aquacer^{®} 535 | 5,7 | 4,0 |
| | | |
| Sillitin^{®} Z 86 | 19,3 | 13,9 |
| Talkum IT extra | 15,5 | 11,1 |
| Bayferrox^{®} 318 M | 51,5 | 37,0 |
| OK 412 | 10,3 | 7,4 |
| | | |

| **Komponente III:** | | |
|---|---|---|
| Bayhydur^{®} 3100, 75 % in MPA | 22,7 | 34,6 |
| | | |
| **NCO/OH-Verhältnis** | 1,5 | |

| | | |
|---|---|---|
| Applikationsbedingung: ca. 23°C und 55% rel. Luftfeuchtigkeit. Trocknungsbedingung: 10 min / RT, 30 min / 80°C und ca. 16h / 60°C Alterung | | |

**Tabelle 3 Hydrolysebeständigkeit nach 72 h bei 90°C und ca. 90% rel. Luftfeuchte**

| | **0-Wert** | | | **nach 72h Hydrolyse und 1h Regenerierung bei RT** | | |
|---|---|---|---|---|---|---|
| **Beispiel** | **B-Härte¹** | **GT²** | **Erweichung³** | **B-Härte¹** | **GT²** | **Erweichung³** |
| 10 | B | 0-1 | 0-1 | 6B | 0 | 4-5 |
| 11 | B | 0-1 | 0-1 | 3B | 0 | 0-1 |
| 12 | HB | 0 | 0-1 | 3B | 0 | 3 |
| 13 | HB | 0-1 | 0-1 | B | 1 | 2 |
| 14 | HB | 2 | 0 | 2B | 0 | 0 |
| 15 | B | 1 | 2 | 4B | 0 | 1-2 |
| 16 | B | 0 | 0 | B | 0-1 | 0-1 |
| 17 | B | 1 | 0 | B | 0 | 0-1 |

| | | | | | | |
|---|---|---|---|---|---|---|
| ¹ Prüfung der Bleistifthärte: Die Bleistifthärtemethode ist eine Prüfung zur Ermittlung der Lackfilmhärte. Es werden Bleistifte unterschiedlichen Härte (6B bis 7H) an lackierten Prüfkörpern wie folgt bei Raumtemperatur getestet: Die Bleistiftspitze wird horizontal geschliffen, so dass sich eine plane, runde Fläche ergibt. In einem Winkel von 45 ° wird der Bleistift anschließend über den zu prüfenden Lackfilm geschoben, wobei eine möglichst gleichbleibende Kraft aufgebracht werden sollte. Der Wert der Bleistifthärte ist ermittelt, wenn die Lackoberfläche zum ersten Mal eine Schädigung aufweist. ² bestimmt nach DIN EN ISO 2409 (O = bester Wert, 5 = schlechtester Wert) ³ Prüfung der Filmerweichung (Fingemagelprobe): Die Filmerweichung wird mit Hilfe der Filmnagelprobe bestimmt. Die Beurteilung der Erweichung durch die Fingernagelprobe ist wie folgt: nicht verkratzbar = 0 (bester Wert) bis auf den Untergrund durchkratzbar = 5 (schlechtester Wert) Alle Beschichtungen gemäß der Beispiel 10-17 weisen eine vergleichbare Härte und exzellente Haptik auf. Die Ergebnisse aus Tabelle 3 belegen aber, dass im Gegensatz zu den erfindungsgemäßen Beschichtungen (Beispiel 16-17) nach 72 h unter Hydrolyse bei 90°C und 90 % relativer Luftfeuchte die Vergleichsbeispiele jedoch erhebliche Filmerweichungen (Abbau durch Hydrolyse (Vergleiche Tabelle 3 Spalte B-Härte /Erweichung)) aufweisen, wohingegen die Beschichtungen aus den erfindungsgemäßen Beispielen 16-17 keinerlei Erweichung zeigen, d.h signifikant hydrolysestabiler sind. | | | | | | |

## Patentansprüche

1. Wässrige Beschichtungsmittel enthaltend
I) hydroxylgruppenfreie Polyurethane und/oder Polyurethanharnstoffe,
II) ionisch modifizierte, hydroxyl- und/oder aminogruppenhaltige Polyurethane und/oder Polyurethanharnstoffe sowie
III) mindestens einen Vernetzer,
**dadurch gekennzeichnet, dass** die Komponenten (I) und (II) Polycarbonatpolyole enthalten, die einen Anteil von mindestens 25 Gew.-% an 1,4-Butandiol als Aufbaukomponente aufweisen.

2. Wässrige Beschichtungsmittel gemäß Anspruch 1, **dadurch gekennzeichnet, dass** die Polycarbonatpolyole 45 bis 100 Gew.-% 1,4-Butandiol und 0 bis 55 Gew.-% 1,6-Hexandiol als Aufbaukomponenten aufweisen.

3. Wässrige Beschichtungsmittel gemäß Anspruch 1, **dadurch gekennzeichnet, dass** die Polycarbonatpolyole 60 bis 100 Gew.-% 1,4-Butandiol und 0 bis 40 Gew.-% 1,6-Hexandiol als Aufbaukomponenten aufweisen.

4. Wässrige Beschichtungsmittel gemäß Anspruch 1, **dadurch gekennzeichnet, dass** die Polycarbonatpolyole eine mittlere Hydroxylfunktionalität von 1,6 bis 4 aufweisen.

5. Wässrige Beschichtungsmittel gemäß Anspruch 1, **dadurch gekennzeichnet, dass** die Polycarbonatpolyole eine Mischung aus 1,4-Butandiol und 1,6-Hexandiol als Aufbaukomponenten enthalten und eine mittlere Hydroxylfunktionalität von 1,9 bis 2,05 aufweisen.

6. Wässriges Beschichtungsmittel gemäß Anspruch 1, **dadurch gekennzeichnet, dass** die Komponente (II) ein Polyurethan-Polymer auf Basis eines Polyesterurethans und eines Polycarbonatpolyols ist.

7. Wässriges Beschichtungsmittel gemäß Anspruch 1, **dadurch gekennzeichnet, dass** der Vernetzer (III) ein Polyisocyanat mit freien Isocyanatgruppen auf Basis aliphatischer oder cycloaliphatischer Isocyanate ist.

8. Zweikomponenten-Lack enthaltend die Beschichtungsmittel gemäß Anspruch 1.

9. Verwendung der Beschichtungsmittel gemäß Anspruch 1 zur Beschichtung von mineralischer Baustoff-Oberflächen, metallischer Oberflächen oder asphalt- oder bitumenhaltiger Beläge, Lackierung und Versiegelung von Holz und Holzwerkstoffen oder Kunststoffoberflächen oder als Hochglanzlack.

10. Verwendung der Beschichtungsmittel gemäß Anspruch 1 zur Herstellung von Softfeel-Lacken auf Kunststoff- oder Holz-Substraten.

11. Softftfeel-Lack, enthaltend die Beschichtungsmittel gemäß Anspruch 1.

12. Mehrschichtenaufbau mit einer obersten Schicht, die eine Klar- oder Decklackschicht ist und einen Softfeel-Lack gemäß Anspruch 11 enthält.

## Claims

1. Aqueous coating materials comprising
I) hydroxyl-free polyurethanes and/or polyurethane-ureas,
II) ionically modified, hydroxyl- and/or amino-containing polyurethanes and/or polyurethane-ureas, and
III) at least one crosslinker,
**characterized in that** the components (I) and (II) comprise polycarbonate polyols which have a fraction of at least 25% by weight of 1,4-butanediol as a synthesis component.

2. Aqueous coating materials according to Claim 1, **characterized in that** the polycarbonate polyols contain 45% to 100% by weight of 1,4-butanediol and 0 to 55% by weight of 1,6-hexanediol as synthesis components.

3. Aqueous coating materials according to Claim 1, **characterized in that** the polycarbonate polyols contain 60% to 100% by weight of 1,4-butanediol and 0 to 40% by weight of 1,6-hexanediol as synthesis components.

4. Aqueous coating materials according to Claim 1, **characterized in that** the polycarbonate polyols have an average hydroxyl functionality of 1.6 to 4.

5. Aqueous coating materials according to Claim 1, **characterized in that** the polycarbonate polyols comprise a mixture of 1,4-butanediol and 1,6-hexanediol as synthesis components and have an average hydroxyl functionality of 1.9 to 2.05.

6. Aqueous coating material according to Claim 1, **characterized in that** component (II) is a polyurethane polymer based on a polyester urethane and a polycarbonate polyol.

7. Aqueous coating material according to Claim 1, **characterized in that** the crosslinker (III) is a polyisocyanate having free isocyanate groups based on aliphatic or cycloaliphatic isocyanates.

8. Two-component paint comprising the coating materials according to Claim 1.

9. Use of the coating materials according to Claim 1 for coating surfaces of mineral building materials, metallic surfaces or asphaltic or bituminous coverings, painting and sealing wood and wood-based materials or plastics surfaces, or as high-gloss varnish.

10. Use of the coating materials according to Claim 1 for producing soft feel paints on plastics substrates or wood substrates.

11. Soft feel paint comprising the coating materials according to Claim 1.

12. Multi-coat system with a topmost coat which is a clearcoat or topcoat film and comprises a soft feel paint according to Claim 11.

## Revendications

1. Agents de revêtement aqueux contenant
I) des polyuréthanes et/ou des polyuréthane-urées exempts de groupes hydroxyles,
II) des polyuréthanes et/ou polyuréthane-urées ioniquement modifiés, contenant des groupes hydroxyles et/ou amino ainsi que
III) au moins un agent de réticulation,
**caractérisés en ce que** les constituants (I) et (II) contiennent des polycarbonatepolyols qui présentent une part d'au moins 25 % en poids de 1,4-butanediol comme constituants de constitution.

2. Agents de revêtement aqueux selon la revendication 1, **caractérisés en ce que** les polycarbonatepolyols présentent de 45 à 100 % en poids de 1,4-butanediol et de 0 à 55 % en poids de 1,6-hexanediol comme constituants de constitution.

3. Agents de revêtement aqueux selon la revendication 1, **caractérisés en ce que** les polycarbonatepolyols présentent de 60 à 100 % en poids de 1,4-butanediol et de 0 à 40 % en poids de 1,6-hexanediol comme constituants de constitution.

4. Agents de revêtement aqueux selon la revendication 1, **caractérisés en ce que** les polycarbonatepolyols présentent une fonctionnalité hydroxyle moyenne de 1,6 à 4.

5. Agents de revêtement aqueux selon la revendication 1, **caractérisés en ce que** les polycarbonatepolyols présentent un mélange de 1,4-butanediol et de 1,6-hexanediol comme constituants de constitution et présentent une fonctionnalité hydroxyle moyenne de 1,9 à 2,05.

6. Agent de revêtement aqueux selon la revendication 1, **caractérisé en ce que** le constituant (II) est un polymère de polyuréthane à base d'un polyester-uréthane et d'un polycarbonatepolyol.

7. Agent de revêtement aqueux selon la revendication 1, **caractérisé en ce que** l'agent de réticulation (III) est un polyisocyanate avec des groupes isocyanates libres à base d'isocyanates aliphatiques ou cycloaliphatiques.

8. Laque biconstituante contenant les agents de revêtement selon la revendication 1.

9. Utilisation des agents de revêtement selon la revendication 1 pour le revêtement de surfaces de matières de construction minérales, de surfaces métalliques ou de couches contenant de l'asphalte ou du bitume, le laquage et le scellement de bois et de matières premières en bois ou de surfaces en matière plastique ou comme laque de brillant élevé.

10. Utilisation des agents de revêtement selon la revendication 1 pour la préparation de laques Softfeel sur des substrats en matière plastique ou en bois.

11. Laque Softfeel contenant les agents de revêtement selon la revendication 1.

12. Construction multicouche avec une couche supérieure qui est une couche de laque transparente ou de couverture et qui contient une laque Softfeel selon la revendication 11.
